# EUROPEAN PATENT APPLICATION

(11) **EP 4 759 557 A1**
(43) Date of publication of application: **17.06.2026**
(21) Application number: 25187868.2
(22) Date of filing: 07.07.2025
(51) Int. Cl.: B60B 1/00, B60B 1/04, B60B 21/06, B60B 5/02, B60B 21/02

(54) **BICYCLE RIM WITH SPOKE HOLE BASE RING AND METHOD FOR MANUFACTURING THE SAME**

(30) Priority: 10.12.2024 CN 202411807398; 26.02.2025 CN 202510220746
(71) Applicant: Xiamen Carbonking Composites Technology Co., Ltd., Xiamen, Fujian (CN)
(72) Inventor: LIU, Wurui, Xiamen, Fujian (CN); XIAO, Peilong, Xiamen, Fujian (CN)
(74) Representative: Balder IP Law, S.L.

(57) **Abstract**

The present disclosure provides a bicycle rim with a spoke hole base ring and a method for manufacturing the same. The bicycle rim with a spoke hole base ring includes a rim body, a spoke hole base ring, a spoke nut, and a spoke. An annular closed chamber is provided in the rim body, the spoke hole base ring is disposed on a bottom wall, corresponding to a radial inner side of the closed chamber, of the rim body, the spoke hole base ring includes a ring belt and a plurality of spoke hole bases disposed on the ring belt, a spoke hole is provided on the spoke hole base, a nipple-threaded end of the spoke pass through the spoke hole and is coaxially assembled with the spoke nut, and a surface of the spoke hole base is perpendicular to an axial direction of the spoke, to enable a mounting direction of the spoke nut to be the same as a mounting direction of the spoke. This prevents one side of the spoke from being in contact with the spoke nut after offset and from being extruded into a bent angle, thereby preventing the spoke from being broken, and prevents the other side of the spoke from not being in contact with the spoke nut, thereby preventing reduction of spoke tension. Therefore, the bicycle rim with a spoke hole base ring is more worry-free and durable. In addition, the riding safety of users is improved, and the requirement for lightweight of the rim is met.

## Description

### TECHNICAL FIELD

The present disclosure relates to the technical field of bicycle rims, and in particular, to a bicycle rim with a spoke hole base ring and a method for manufacturing the same.

### BACKGROUND

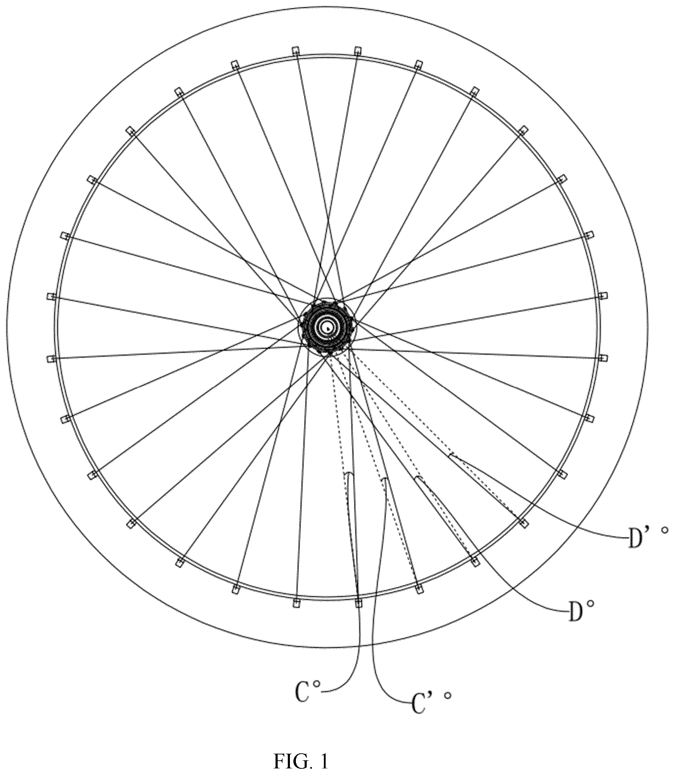

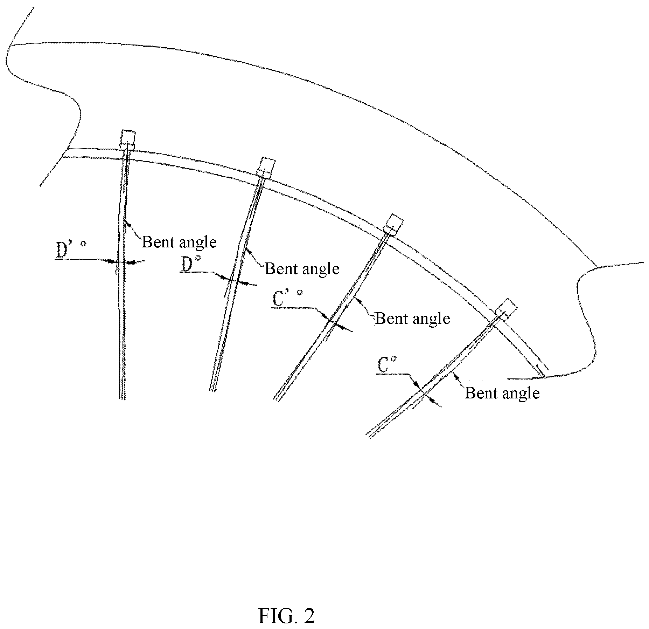

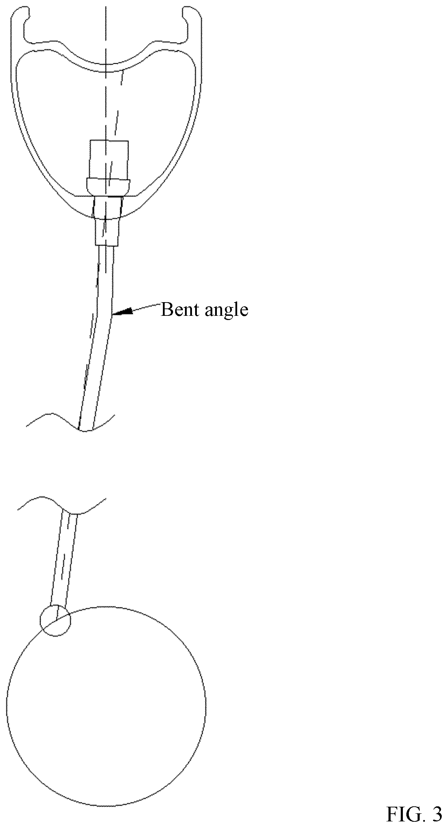

Refer to FIG. 1 to FIG. 3. At present, a spoke hole is provided on a circumferential inner wall of a bicycle rim body, and a nipple-threaded end of a spoke passes through the spoke hole and is mounted and fitted with a spoke nut. A mounting direction of the spoke nut is consistent with a radial direction of the rim body. However, the mounting direction of the spoke has a plurality of different angles, and is different from the radial direction of the rim body. As a result, the spoke nut and a spoke corresponding to the spoke nut cannot be located on a same axis, and one side of the spoke is in contact with the spoke nut after offset and is extruded into a bent angle (as shown at arrows shown in FIG. 2 and FIG. 3). Therefore, the spoke is easy to break after long-term use, and the other side of the spoke is easy to loosen because of not in contact with the spoke nut, resulting in reduction of spoke tension. Therefore, adjustment needs to be performed frequently, which is troublesome. In addition, when one spoke is loosened, stress of other spokes becomes large. Due to this chain reaction, multiple spokes are loosened and damaged, potential risks are high, and the safe riding of users is affected. Furthermore, to ensure that the rim body is not destroyed while the spoke is under a high tensile force, a thicker wall thickness of the rim body is designed at the position of the spoke hole. As a result, a thickness of the inner wall of the rim body is large, and weight is not light enough.

### SUMMARY

The present disclosure aims to provide a bicycle rim with a spoke hole base ring, to resolve the above technical problems.

To achieve the above objective, the technical solution adopted by the present disclosure is: A bicycle rim with a spoke hole base ring includes a rim body, a spoke hole base ring, a spoke nut, and a spoke, where an annular closed chamber is provided in the rim body, the spoke hole base ring is disposed on a bottom wall, corresponding to a radial inner side of the closed chamber, of the rim body, the spoke hole base ring includes a ring belt and a plurality of spoke hole bases disposed on the ring belt, a spoke hole is provided on the spoke hole base, a nipple-threaded end of the spoke passes through the spoke hole and is coaxially assembled with the spoke nut, and a surface of the spoke hole base is perpendicular to an axial direction of the spoke.

Preferably, the spoke hole base is disposed on a sidewall of an outer ring of the ring belt, the spoke nut includes a spoke head and a shaft sleeve that are perpendicular to each other, a bottom surface of the spoke head is flush with the surface of the spoke hole base, and the nipple-threaded end of the spoke passes through the spoke hole and is coaxially assembled with the shaft sleeve of the spoke nut.

Preferably, the spoke hole base ring includes a plurality of spoke hole base segments that are sequentially spliced end to end.

Preferably, there are six spoke hole base segments, four spoke hole bases are disposed on each spoke hole base segment, and inclination angles of spoke holes on the four spoke hole bases are different from each other.

Preferably, two ends of the spoke hole base segment are respectively extended with an upper connecting piece and a lower connecting piece, and two adjacent spoke hole base segments are attached and spliced one above the other through the upper connecting piece and the lower connecting piece.

Preferably, a transverse cross-section of the spoke hole base is a circle, an ellipse, a square, a trapezoid, or a triangle.

Preferably, a radial outer side, corresponding to the closed chamber, of the rim body extends with a rim bed for accommodating a tire.

Preferably, a piece of prepreg fiber cloth is wrapped on a surface of the spoke hole base ring.

The present disclosure further provides a method for manufacturing the bicycle rim with a spoke hole base ring. The method includes:
S1, manufacturing a spoke hole base ring with a spoke hole base via a special die and a carbon fiber material;
S2, embedding the spoke hole base ring in the bottom wall of the rim body with the carbon fiber material in a pre-molding process, to form an intact rim, putting a pre-molded semi-finished product into a rim molding die, placing the rim molding die within molding equipment in a die closing state, filling high-pressure gas in a molding gas bag, and pressurizing and heating to 150° to 160° for molding and curing for not less than 30 minutes;
S3, taking a molded rim from the die; trimming, taking the molding gas bag, and inspecting flatness and roundness of the rim;
S4, processing the spoke hole, which is to provide, on the spoke hole base, the spoke hole that is perpendicular to the surface of the spoke hole base; and
S5, threading the nipple-threaded end of the spoke through the spoke hole, coaxially assembling the nipple-threaded end with the spoke nut, and mounting a spoke head end of the spoke on a hub, to enable a mounting direction of the spoke nut to be the same as a mounting direction of the spoke.

The present disclosure has the following beneficial effects.

In the present disclosure, the bicycle rim with a spoke hole base ring includes a rim body, a spoke hole base ring, a spoke nut, and a spoke, where an annular closed chamber is provided in the rim body, the spoke hole base ring is disposed on a bottom wall, corresponding to a radial inner side of the closed chamber, of the rim body, the spoke hole base ring includes a ring belt and a plurality of spoke hole bases disposed on the ring belt, a spoke hole is provided on the spoke hole base, a nipple-threaded end of the spoke passes through the spoke hole and is coaxially assembled with the spoke nut, a spoke head end of the spoke is mounted on a hub, and a surface of the spoke hole base is perpendicular to an axial direction of the spoke, to enable a mounting direction of the spoke nut to be the same as a mounting direction of the spoke. In this technical solution, the spoke nut and a spoke corresponding to the spoke nut are located on a same axis. This prevents one side of the spoke from being in contact with the spoke nut after offset and from being extruded into a bent angle, thereby preventing the spoke from being broken, and prevents the other side of the spoke from not being in contact with the spoke nut, thereby preventing reduction of spoke tension. Therefore, unnecessary adjustment is avoided, and the bicycle rim with a spoke hole base ring is more worry-free and durable. In addition, loosening of one spoke is prevented, thereby preventing stress of other spokes from becoming large, and preventing multiple spokes from being loosened and damaged due to chain reaction. Therefore, potential risks are eliminated, and the riding safety of users is improved. Furthermore, the spoke hole base ring is disposed, so that a bearing force of the rim is large, and the bottom wall, on the inner side, of the rim can be made thinner and lighter, thereby reducing the weight of the whole rim and meeting the requirement for lightweight of the rim.

### BRIEF DESCRIPTION OF DRAWINGS

FIG. 1 is a schematic diagram of a structure of a bicycle rim in a conventional technology;
FIG. 2 is a schematic diagram of a bent angle of a spoke of a bicycle rim at a transverse sectional view in a conventional technology;
FIG. 3 is a schematic diagram of a bent angle of a spoke of a bicycle rim at a longitudinal sectional view in a conventional technology;
FIG. 4 is a schematic diagram of a structure of a bicycle rim according to an embodiment of the present disclosure;
FIG. 5 is a partially enlarged schematic view of a bicycle rim at a transverse sectional view according to an embodiment of the present disclosure;
FIG. 6 is a schematic diagram of a bicycle rim at a longitudinal sectional view according to an embodiment of the present disclosure;
FIG. 7 is an assembly view of a spoke according to an embodiment of the present disclosure;
FIG. 8 is a partially enlarged schematic view of FIG. 7;
FIG. 9 is an assembly view of another spoke according to an embodiment of the present disclosure;
FIG. 10 is a partially enlarged schematic view of FIG. 9;
FIG. 11 is a schematic diagram of a structure of a spoke hole base ring according to an embodiment of the present disclosure;
FIG. 12 is a schematic diagram of a structure of a spoke hole base segment according to an embodiment of the present disclosure; and
FIG. 13 is a half-sectional view of a spoke hole base segment according to an embodiment of the present disclosure.

Reference numerals: 1: rim body; 11: closed chamber; 12: bottom wall; 13: rim bed; 2: spoke hole base ring; 21: ring belt; 22: spoke hole base; 23: upper connecting piece; 24: lower connecting piece; 3: spoke nut; 4: spoke; 5: hub.

### DESCRIPTION OF EMBODIMENTS

To further illustrate the embodiments, the present invention provides accompanying drawings. The accompanying drawings, as a part of the present disclosure, are mainly used to illustrate the embodiments, and can explain the operating principles of the embodiments with reference to the related descriptions in this specification. With reference to such content, those of ordinary skill in the art can understand other possible implementations and the advantages of the present disclosure. Components in the drawings are not drawn to scale, and similar reference numerals are usually used to represent similar components.

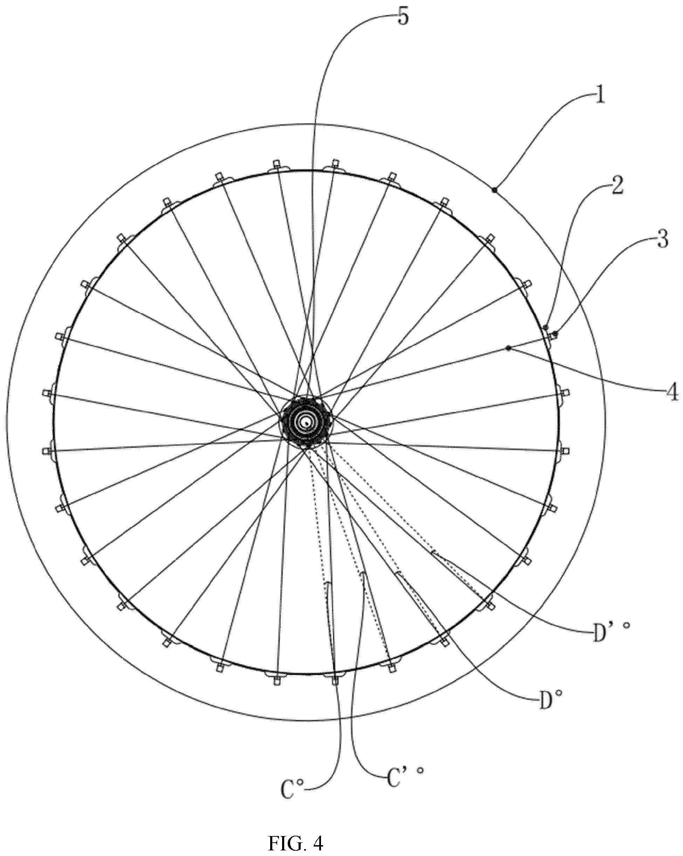

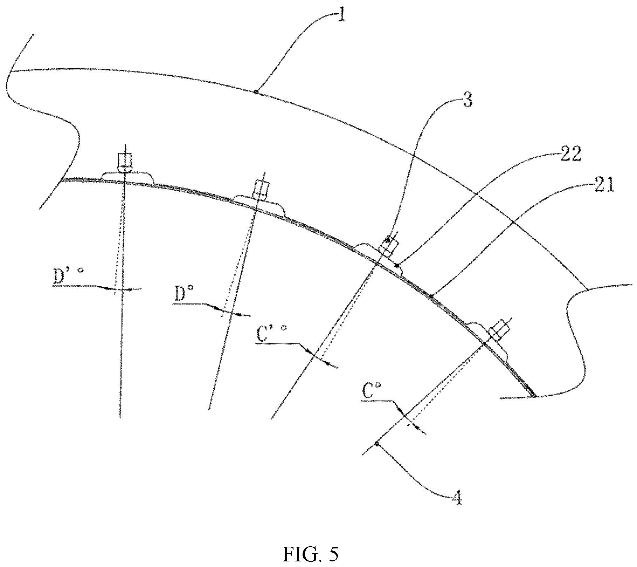

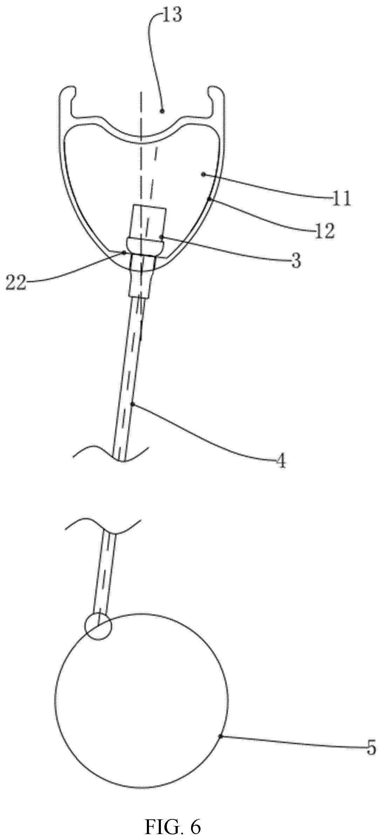

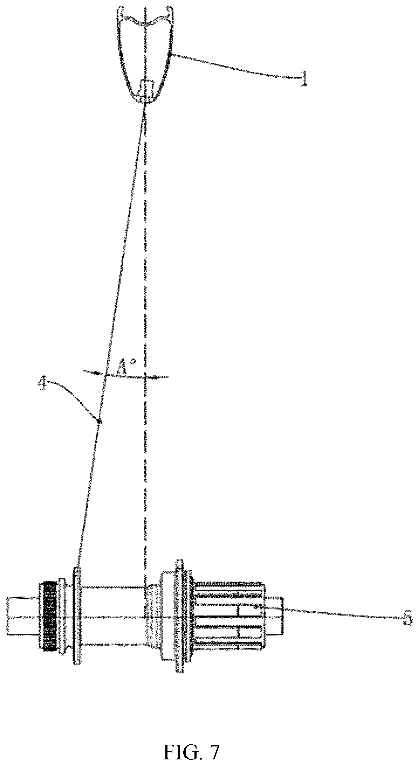

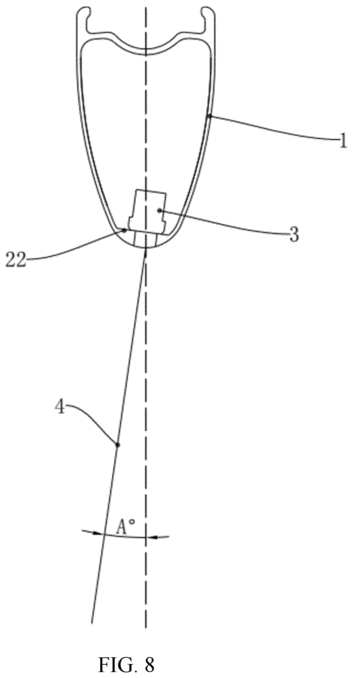

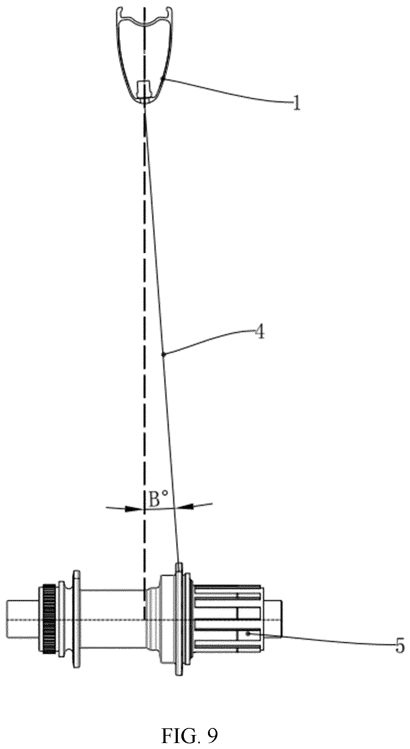

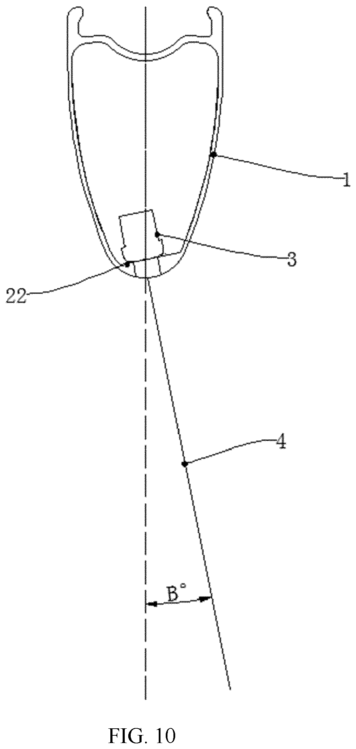

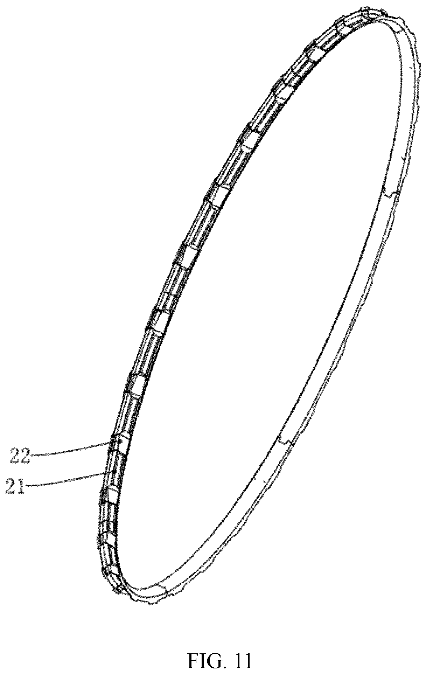

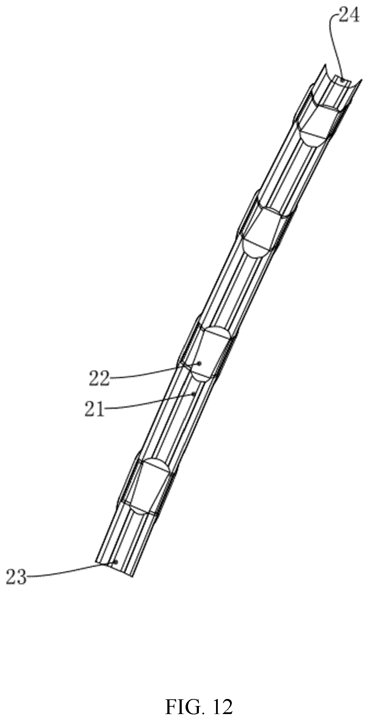

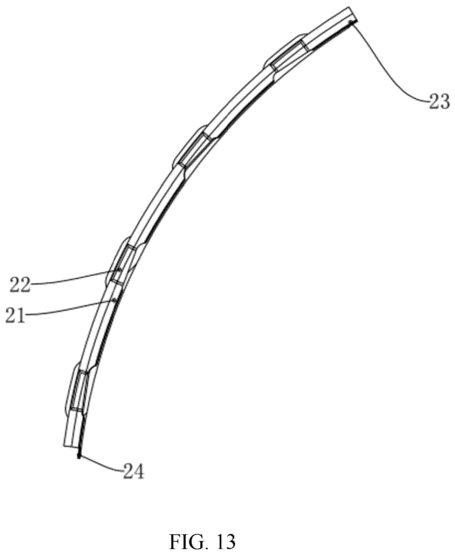

Refer to FIG. 4 to FIG. 13. An embodiment of the present disclosure provides a bicycle rim with a spoke hole base ring. The bicycle rim with a spoke hole base ring includes a rim body 1, a spoke hole base ring 2, a spoke nut, and a spoke 4. The rim body 1 has a carbon fiber structure, and an annular closed chamber 11 is provided in the rim body 1. The spoke hole base ring 2 is disposed on a bottom wall 12, corresponding to a radial inner side of the closed chamber 11, of the rim body 1. The spoke hole base ring 2 includes a ring belt 21 and a plurality of spoke hole bases 22 disposed on the ring belt 21. A spoke hole is provided on the spoke hole base 22, a nipple-threaded end of the spoke 4 passes through the spoke hole and is coaxially assembled with the spoke nut 3, a spoke head end of the spoke on a hub 5, and a surface of the spoke hole base 22 is perpendicular to an axial direction of the spoke 4. A mounting direction of the spoke nut 3 is the same as a mounting direction of the spoke 4, that is, the spoke nut 3 is coaxially disposed with the spoke 4. In this technical solution, the spoke nut 3 and a spoke 4 corresponding to the spoke nut 3 are located on a same axis. This prevents one side of the spoke 4 from being in contact with the spoke nut 3 after offset and from being extruded into a bent angle, thereby preventing the spoke from being broken, and prevents the other side of the spoke 4 from not being in contact with the spoke nut 3, thereby preventing reduction of spoke 4 tension. Therefore, unnecessary adjustment is avoided, and the bicycle rim with a spoke hole base ring is more worry-free and durable. In addition, loosening of one spoke 4 is prevented, thereby preventing stress of other spokes 4 from becoming large, and preventing multiple spokes 4 from being loosened and damaged due to chain reaction. Therefore, potential risks are eliminated, and the riding safety of users is improved. Furthermore, the spoke hole base ring 2 is disposed, so that a bearing force of the rim is large, and the bottom wall 12, on the inner side, of the rim can be made thinner and lighter, thereby reducing the weight of the whole rim and meeting the requirement for lightweight of the rim.

In this embodiment, the spoke hole base 22 is disposed on a sidewall of an outer ring of the ring belt 21. The spoke nut 3 includes a spoke head and a shaft sleeve that are perpendicular to each other. A bottom surface of the spoke head is flush with the surface of the spoke hole base 22, and the nipple-threaded end of the spoke 4 passes through the spoke hole and is coaxially assembled with the shaft sleeve of the spoke nut 3. This ensures mounting stability of the spoke nut 3 at the spoke hole. In addition, the surface of the spoke hole base 22 is perpendicular to the axial direction of the spoke 4, thereby adapting to a structure of an existing spoke nut 3. Therefore, the spoke nut 3 does not need to be improved, and development costs are saved.

In this embodiment, the spoke hole base ring 2 includes six spoke hole base segments, four spoke hole bases 22 are disposed on each spoke hole base segment, and inclination angles of spoke holes on the four spoke hole bases 22 are different from each other. This reduces costs of developing and manufacturing corresponding dies. Certainly, a quantity of spoke hole base segments, spoke hole bases 22, or spoke holes can be adapted based on an actual quantity of spokes. For example, the spoke hole base ring may be formed by sequentially splicing four spoke hole base segments end to end, which is not limited herein.

In this embodiment, two ends of the spoke hole base segment are respectively extended with an upper connecting piece 23 and a lower connecting piece 24, and two adjacent spoke hole base segments are attached and spliced one above the other through the upper connecting piece 23 and the lower connecting piece 24. This ensures that a thickness of the ring belt 21 at a splicing position is basically the same as that at another position, and ensures better connection stability.

In this embodiment, a transverse cross-section of the spoke hole base 22 is a circle, an ellipse, a square, a trapezoid, or a triangle.

In this embodiment, a radial outer side, corresponding to the closed chamber 11, of the rim body 1 extends with a rim bed 13 for accommodating a tire.

In this embodiment, a piece of prepreg fiber cloth is wrapped on a surface of the spoke hole base ring. This further improves solidification stability of the spoke hole base ring in the rim body 1.

The present disclosure further provides a method for manufacturing the bicycle rim with a spoke hole base ring 2. The method includes the following steps.

S1: Manufacture a spoke hole base ring 2 with a spoke hole base 22 via a special die and a carbon fiber material.

S2: Embed a spoke hole base ring 2 in a bottom wall of a rim body with the carbon fiber material in a pre-molding process, to form an intact rim, put a pre-molded semi-finished product into a rim molding die, place the rim molding die within molding equipment in a die closing state, fill high-pressure gas in a molding gas bag, and pressurize and heat to 150° to 160° for molding and cure for not less than 30 minutes.

S3: Take a molded rim from the die; trim, take the molding gas bag, and inspect flatness and roundness of the rim.

S4: Process the spoke hole, which is to provide, on the spoke hole base 22, the spoke hole that is perpendicular to the surface of the spoke hole base 22.

S5: Thread the nipple-threaded end of the spoke 4 through the spoke hole, coaxially assemble the nipple-threaded end 41 with the spoke nut 3, and mount a spoke head end 42 of the spoke 4 on a hub 5, to enable a mounting direction of the spoke nut 3 to be the same as a mounting direction of the spoke 4.

Although the present disclosure is specifically illustrated and described fall combination with preferred implementation solutions, those skilled in the art should understand that various changes may be made to the present disclosure in terms of forms and details without departing from the spirit and scope of the present disclosure defined in the appended claims, which shall fall within the protection scope of the present disclosure.

## Claims

1. A bicycle rim with a spoke hole base ring, comprising a rim body (1), a spoke hole base ring (2), a spoke nut (3), and a spoke (4), wherein an annular closed chamber (11) is provided in the rim body (1), the spoke hole base ring (2) is disposed on a bottom wall (12), corresponding to a radial inner side of the closed chamber (11), of the rim body (1), the spoke hole base ring (2) comprises a ring belt (21) and a plurality of spoke hole bases (22) disposed on the ring belt (21), a spoke hole is provided on the spoke hole base (22), a nipple-threaded end of the spoke (4) passes through the spoke hole and is coaxially assembled with the spoke nut (3), and a surface of the spoke hole base (22) is perpendicular to an axial direction of the spoke (4).

2. The bicycle rim with a spoke hole base ring according to claim 1, wherein the spoke hole base (22) is disposed on a sidewall of an outer ring of the ring belt (21), the spoke nut (3) comprises a spoke head and a shaft sleeve that are perpendicular to each other, a bottom surface of the spoke head is flush with the surface of the spoke hole base (22), and the nipple-threaded end of the spoke (4) passes through the spoke hole and is coaxially assembled with the shaft sleeve of the spoke nut (3).

3. The bicycle rim with a spoke hole base ring according to claim 1, wherein the spoke hole base ring (2) comprises a plurality of spoke hole base segments that are sequentially spliced end to end.

4. The bicycle rim with a spoke hole base ring according to claim 3, wherein there are six spoke hole base segments, four spoke hole bases (22) are disposed on each spoke hole base segment, and inclination angles of spoke holes on the four spoke hole bases (22) are different from each other.

5. The bicycle rim with a spoke hole base ring according to claim 3, wherein two ends of the spoke hole base segment are respectively extended with an upper connecting piece (23) and a lower connecting piece (24), and two adjacent spoke hole base segments are attached and spliced one above the other through the upper connecting piece (23) and the lower connecting piece (24).

6. The bicycle rim with a spoke hole base ring according to claim 1, wherein a transverse cross-section of the spoke hole base (22) is a circle, an ellipse, a square, a trapezoid, or a triangle.

7. The bicycle rim with a spoke hole base ring according to claim 1, wherein a radial outer side, corresponding to the closed chamber (11), of the rim body (1) extends with a rim bed (3) for accommodating a tire.

8. The bicycle rim with a spoke hole base ring according to claim 1, wherein a piece of prepreg fiber cloth is wrapped on a surface of the spoke hole base ring (2).

9. A method for manufacturing the bicycle rim with a spoke hole base ring according to any one of claims 1 to 8, comprising:
S1, manufacturing a spoke hole base ring (2) with a spoke hole base (22) via a special die and a carbon fiber material;
S2, embedding the spoke hole base ring (2) in the bottom wall (12) of the rim body (1) with the carbon fiber material in a pre-molding process, to form an intact rim, putting a pre-molded semi-finished product into a rim molding die, placing the rim molding die within molding equipment in a die closing state, filling high-pressure gas in a molding gas bag, and pressurizing and heating to 150° to 160° for molding and curing for not less than 30 minutes;
S3, taking a molded rim from the die; trimming, taking the molding gas bag, and inspecting flatness and roundness of the rim;
S4, processing the spoke hole, which is to provide, on the spoke hole base (22), the spoke hole that is perpendicular to the surface of the spoke hole base (22); and
S5, threading the nipple-threaded end of the spoke (4) through the spoke hole, coaxially assembling the nipple-threaded end with the spoke nut (3), and mounting a spoke head end of the spoke (4) on a hub, to enable a mounting direction of the spoke nut (3) to be the same as a mounting direction of the spoke (4).
